# EUROPÄISCHE PATENTSCHRIFT

(11) **EP 4 145 651 B1**
(45) Veröffentlichungstag und Bekanntmachung des Hinweises auf die Patenterteilung: **25.06.2025**
(21) Anmeldenummer: 22188063.6
(22) Anmeldetag: 01.08.2022
(51) Int. Cl.: H02G 3/00

(54) **ENDSEITIG EINSEITIG ABGESTÜTZTER AUSLEGER FÜR EIN KABELTRAGSYSTEM**
CANTILEVER ARM FOR A CABLE SUPPORT SYSTEM SUPPORTED AT THE END ON ONE SIDE
FLÈCHE À APPUI D'UN SEUL CÔTÉ D'EXTRÉMITÉ POUR UN SYSTÈME DE PORTE-CÂBLE

(30) Priorität: 03.08.2021 DE 202021104126 U
(43) Veröffentlichungstag der Anmeldung: 08.03.2023
(73) Patentinhaber: OBO Bettermann Produktion Deutschland GmbH & Co.KG, 58710 Menden (DE)
(72) Erfinder: Große Gehling, Andreas, 58710 Menden (DE); Kutschelis, Kevin, 58675 Hemer (DE)
(74) Vertreter: Haverkamp Patentanwälte PartG mbB

(56) Entgegenhaltungen:
- EP-A1- 2 290 772
- EP-A1- 3 437 518
- EP-A2- 0 108 222
- EP-B1- 2 808 964
- DE-B- 1 236 041
- DE-T2- 69 529 669
- FR-A- 1 293 660
- US-A1- 2004 104 322
- US-B2- 9 277 814
- LEGRAND A: "CATALOG 2016 2017 CABLOFIL Cable Management PW Ladder Tray TROUGH TRAYS Fiber Trough & V-Trough FASTENERS J-Hooks, FAS Power Brackets & CabloPort", 31 December 2016 (2016-12-31), pages 1 - 288, XP055930846, Retrieved from the Internet <URL:http://contactfd.com/wp-content/uploads/Catalog-Cablofil-2016-2017.pdf> [retrieved on 20220614]

## Beschreibung

Die Erfindung betrifft eine Anordnung umfassend eine Abstützung und einen endseitig einseitig an der Abstützung abgestützten Ausleger für ein Kabeltragsystem mit den Merkmalen des Oberbegriffs des Anspruchs 1.

Kabeltragsysteme dienen dem Tragen von Kabeln im Raum, typischerweise in einem Gebäude. Hierzu verfügt das Kabeltragsystem über eine Kabeltrasse. Auf der Kabeltrasse sind Kabel und Leitungen geführt bzw. gelegt. Die Kabeltrasse kann etwa nach Art einer Kabelrinne oder eines Kabelkanals, gebildet durch ein oder mehrere Kabeltrassensegmente, ausgeführt sein. Eine andere Möglichkeit ist das Vorsehen von einzelnen Sprossen, über die Kabel abgestützt werden; ein durchgängiges Trassenelement als Kabeltrassensegment wird hierdurch eingespart.

Eine Möglichkeit der Abstützung einer Kabeltrasse besteht in einer seitlichen Befestigung derselben. Hierfür sind Ausleger vorgesehen, die die Kabeltrasse an einem senkrechten Teil abstützen und zu diesem Zweck an diesem befestigt sind. Das senkrechte Teil kann beispielsweise eine Wand oder ein an einer Decke befestigter, hiervon herunterragender Hängestiel sein. Zur Ausbildung der Kabeltrasse können etwaige Kabel oder Leitungen unmittelbar auf den Ausleger nach Art einer Sprossentrasse gelegt werden; möglich ist jedoch auch, ein durchgängiges Trassenelement oberseitig auf dem Ausleger zu befestigen. Sind Kabel und/oder Leitungen verlegt, wird ein Ausleger durchaus mit mehreren Zehnern, ggf. sogar mehreren hundert Kilogramm belastet.

In EP 2 808 964 B1 ist ein Ausleger vorgeschlagen, der endseitig einseitig abgestützt ist. Hierzu ist der Ausleger mittels einer Schraubverbindung an einem von einer Decke herabragenden Hängestiel befestigt. Der Ausleger ist durch ein U-Profil bereitgestellt, mithin durch ein offenes Profil. Die beiden Seitenwände, die an den Rücken des U-Profils angeformt sind, schließen ein Profilvolumen ein. Die Öffnungsrichtung dieses Profils weist nach unten, mithin in Gewichtskraftrichtung. Auf der Oberseite dieses Auslegers kann eine Kabeltrasse, beispielsweise in Form von Leitungen oder Kabeltrassensegmenten befestigt werden. Durch das einseitige Abstützen können Kabel oder Leitungen seitlich auf den Ausleger gelegt werden, sodass eine einfache Montage möglich ist.

Nachteilig an diesem Stand der Technik ist, dass dieser Ausleger bei höherer Belastung zu einem Knicken in Gewichtskraftrichtung neigt. Wenn durch einen solchen Ausleger höhere Tragkräfte aufgefangen werden sollen, muss dieser mit einer entsprechend größeren Materialstärke versehen werden.

Einen Vorschlag hierzu macht etwa die Offenbarung in EP 0 108 222 A2, in der ein endseitig einseitig abgestützter Ausleger vorgeschlagen wird, dessen Öffnungsrichtung des Profils nach oben weist.

Die US 2004/0104322 A1 beschreibt eine Tragkonsole für Kabeltrassen mit einem Basisteil zur Deckenbefestigung und einem im Wesentlichen U-förmigen Schaftabschnitt, an dem ein Ausleger befestigt werden kann. Ein Ende des Auslegers wird dazu zwischen zwei Flansche des Schaftabschnitts gebracht und so ausgerichtet, dass Bohrungen der Flansche und des Auslegers einander gegenüberliegen, sodass diese von einem Stift, Splint oder Bolzen durchsetzt werden können.

DE 695 296 69 T2 offenbart einen einseitig abgestützten Ausleger. Dieser Ausleger ist als gebogener Ausleger ausgestaltet, der einen vertikalen Bereich zum Anschließen an eine senkrechte Abstützung, etwa eine Wand, aufweist. Angebunden ist dieser Ausleger mit seinem vertikalen Bereich, respektive mittels einer Schraubverbindung, welche durch ein in dem Rücken eingebrachten Langloch des Auslegers hindurchragt. Aufgrund der Biegung des Auslegers müssen aus der Abstützung resultierende Biegemomente innerhalb des Profils übertragen werden.

Vor diesem Hintergrund ist es Aufgabe der Erfindung, einen Ausleger vorzuschlagen, der in Bezug auf seine Stabilität verbessert ist, ohne dass jedoch das benötigte Material und damit Ressourcen aus diesem Grunde erhöht wird.

Gelöst wird diese Aufgabe durch einen eingangs genannten, gattungsgemäßen Ausleger mit den Merkmalen des Anspruchs 1.

Bevorzugte Ausgestaltungen ergeben sich aus den abhängigen Ansprüchen sowie der Beschreibung.

Die Gewichtskraft einer von einem Ausleger getragenen Kabeltrasse, bei der es sich um unmittelbar auf dem Ausleger liegende Leitungen oder ein Kabeltrassensegment mit darin verlegten Leitungen handelt, weist, der Schwerkraft folgend, in vertikaler Richtung nach unten. Das Profil des vorgeschlagenen Auslegers ist im Unterschied zu der Auslegung vorbekannter Ausleger nach oben hin offen, mithin nach unten durch seinen Rücken geschlossen. Wird der Ausleger durch eine Kabeltrasse belastet, ergibt sich durch die endseitig einseitige Abstützung ein auf den Ausleger wirkendes Biegemoment. Konkret bedeutet dieses, dass auf den Ausleger im oberen Bereich der Seitenwände in eine in Auslegerlängserstreckungsrichtung gerichtete Zugkraft und im unteren Bereich der Seitenwände sowie des Rückens eine entgegengesetzte, der Längserstreckung des Auslegers folgende Druckkraft wirkt. Durch das Vorsehen eines Rückens im Druckbereich ist nicht nur eine recht großflächige Abstützung an einer den Ausleger tragenden Abstützung bereitgestellt, sondern vor allem wird im Druckbereich ein Ausknicken des Auslegers verhindert. Demgegenüber ist eine Zugkraftaufnahme durch die offene Profilausgestaltung an der oberen Seite des Auslegers nicht nachteilig. Hierbei macht man sich zunutze, dass die Zugseite eines Auslegers nicht ausknicken kann. Demzufolge ist das Profil im Zugbereich offen und im Druckbereich durch den Rücken geschlossen. Der Rücken bildet den unteren Abschluss des Profils.

Die durch den Rücken miteinander verbundenen Seitenwände sind voneinander beabstandet und ragen in die gleiche Richtung ab. Das Abragen der Seitenwände von dem Rücken in die gleiche Richtung bedeutet nicht, dass diese parallel zueinander verlaufen müssen. Typischerweise sind die Seitenwände von dem Rücken abgekantet, vor allem dann, wenn es sich bei dem Ausleger um einen solchen handelt, der aus einer Blechplatine beispielsweise im Rahmen eines Walzprofilierprozesses hergestellt ist. Denkbar ist jedoch auch, dass das Profil durch ein Strangpressprodukt bereitgestellt ist.

Ferner ist vorgesehen, dass das Profil in seinem Querschnitt trapezförmig ausgebildet ist. Dem Kraftkonzept folgend, ist es vorteilhaft, wenn sich im Querschnitt der Abstand der Seitenwände zueinander zu dem Rücken hin verjüngt. Der Abstand der Seitenwände braucht entlang der Längserstreckung des Auslegers nicht konstant zu sein. Ein solcher Ausleger kann sich durchaus in Längserstreckung zu seinem freien Ende hin verjüngen. Durch diese Ausgestaltung ist eine einfache Walzprofilierung ermöglicht, wodurch die Herstellkosten sinken.

Bevorzugt ist vorgesehen, dass der Winkel, der durch Rücken und jeweilige Seitenwand eingeschlossen ist, etwa > 90° - 110°, bevorzugt 92° - 100° beträgt. Hierdurch wird eine besonders gute Kraftverteilung zwischen Rücken und Seitenwänden bezogen auf das in den Ausleger eingebrachte Biegemoment und die Gewichtskraft bei gleichzeitig einfacher Produktion und Lagerung bereitgestellt.

Bevorzugt ist vorgesehen, dass die Seitenwände über jeweils abgekantete Fortsätze verfügen (auch wenn auch nur eine Seitenwand über einen abgekanteten Fortsatz verfügen kann). Diese verhindern ein Einreißen der Seitenwände in dem Bereich, in dem die Zugkraft am größten ist. Außerdem stabilisieren sie die Seitenwände zusätzlich in Querrichtung, sodass ein quer zur Gewichtskraft eingeleitetes Biegemoment besser durch den erfindungsgemäßen Ausleger aufgenommen werden kann. Zudem wird eine Vibrationsneigung der Seitenwände verringert. Sinnvoll ist es, wenn die Fortsätze der Längserstreckung der Seitenwände durchgängig folgen, sodass der jeweilige Fortsatz selbst in sich abgestützt ist.

Grundsätzlich kann vorgesehen sein, dass das Profil als Hutprofil ausgeformt ist. Bevorzugt ist jedoch vorgesehen, dass die gegenüberliegenden Fortsätze der Seitenwände zueinander weisen. Auf diese Weise schließen sie das Profilvolumen weiter ein und benötigen bezogen auf den Querschnitt des Auslegers keinen zusätzlichen Raum in Breitenrichtung. Eine solche Profilierung entspricht einer C-Profilierung. Zudem sind die Fortsätze typischerweise parallel zu dem Rücken ausgerichtet.

Zum Anschließen eines Kabeltrassensegmentes kann vorgesehen sein, dass Teil des Auslegers zumindest ein Anschlusselement ist oder dass ein solches mit dem Ausleger in Eingriff gestellt ist. Dieses kann zum Befestigen von Leitungen, Kabeln oder eines Kabeltrassensegmentes dienen. Ein solches Anschlusselement ist gemäß einer Ausgestaltung an den Seitenwänden und/oder an den Fortsätzen, falls vorhanden, dergestalt abgestützt, dass es fixiert ist, beispielsweise durch einen Formschluss.

Bevorzugt ist vorgesehen, dass das Anschlusselement gegenüber dem Ausleger zumindest formschlüssig entgegen der Gewichtskraftrichtung abgestützt ist. Beispielsweise kann vorgesehen sein, dass das Anschlusselement in zumindest eine Seitenwand formschlüssig in Gewichtskraftrichtung eingreift. Sind Fortsätze an die Seitenwände angeformt, kann das Anschlusselement sich auch flächig an den Fortsätzen abstützen. Auf diese Weise kann ein oberseitig auf dem Ausleger aufliegendes Teil an dem Ausleger reibschlüssig quer zur Gewichtskraft gehalten werden.

Gemäß einer anderen Ausgestaltung ist vorgesehen, dass das zumindest eine Anschlusselement nur in Gewichtskraftrichtung abgestützt ist. Dann ist die Montage vereinfacht, da es - typischerweise im oberen Bereich - des Auslegers auf diese Weise gehalten ist. Hierzu können die Seitenwände beispielsweise eine Kulissenführung aufweisen, in die das dann typischerweise plattenförmige Anschlusselement einschiebbar ist. Sind die Seitenwände trapezförmig gegenüber dem Rücken ausgebildet und weisen die Seitenwände zueinander weisende Fortsätze auf, kann das zumindest eine Anschlusselement auch in den Hinterschnitt, gebildet durch Seitenwand und Fortsatz, eingeschoben werden.

Ein solches Anschlusselement ist typischerweise, wenn im Profilvolumen angeordnet, gegen ein Verdrehen gesichert, typischerweise infolge seiner Umrissgeometrie. Auf diese Weise kann das Anschlusselement nach Art eines Mutterelementes ausgelegt sein, in das eine Schraube eingeschraubt werden kann. Auf diese Weise kann ein Kabel, eine Leitung oder ein Kabeltrassensegment problemlos montiert werden.

Denkbar ist in einer Ausgestaltung, bei der das Anschlusselement zumindest ein von dem Anschlusselement abragendes Verbindungselement aufweist, an dem ein Kabeltrassensegment werkzeuglos befestigt werden kann. Hierzu kann das abragende Element etwa nach Art eines Widerhakens oder einer Rastnase oder einer Rastklinke ausgebildet sein.

Zur endseitigen einseitigen Abstützung des Auslegers an einer diesen tragenden Abstützung, beispielsweise einem Hängestiel, einer Wand oder dergleichen, ist eine Anbindungsmöglichkeit an zumindest einem Endabschnitt desselben vorgesehen. Gemeint ist der Endabschnitt an einem distalen Ende des Auslegers. An seinem anderen Ende ist der Auslegergrundsätzlich nicht abgestützt.

Die endseitige einseitige Abstützung des Auslegers an einer diesen tragenden Abstützung ist in Bezug auf das Biegemoment nach Art einer Zweipunktabstützung ausgelegt, wobei im oberen Bereich des Auslegers die Abstützung auf Zug, in seinem unteren Bereich auf Druck belastet ist. Um eine einfache Montage zu verwirklichen, ist vorgesehen, dass das Profil in einem dem Rücken in vertikaler Richtung gegenüberliegenden Endabschnitt an eine den Ausleger tragende Abstützung angebunden ist und im Bereich des Rückens an der Abstützung abgestützt ist. So bedarf es für eine Abstützung im unteren Bereich nur eines Anliegens bzw. Kontaktierens des Auslegers an der Abstützung. Demgegenüber ist im oberen Bereich das Profil bzw. der Ausleger an die diesen tragende Abstützung angebunden. Diese Anbindung ist im Wesentlichen nur auf Zug belastet. An diesem Anbindungspunkt ist auch eine Übertragung der Gewichtskräfte vorgesehen. Eine formschlüssige Verbindung in Richtung der Längserstreckung des Auslegers mit der diesen tragenden Abstützung ist somit grundsätzlich nur im oberen Zugbereich erforderlich. Hierdurch ist die Montage des Auslegers an einer diesen tragenden Abstützung erleichtert. Wenn gewünscht, kann auch im unteren Endbereich des Auslegers ein Formschluss mit einer diesen tragenden Abstützung vorgesehen sein.

Es ist vorgesehen, dass die Anbindung des Auslegers über zumindest eine Seitenwand oder einen Seitenwandfortsatz erfolgt. Auf diese Weise wird die benötigte Befestigungskraft in Zugkraftrichtung in die Seitenwände direkt eingeleitet. So ist einem optimalen Kraftfluss genüge getan. Eine Anbindung ist vorzugsweise dergestalt ausgeführt, dass die Anbindung in beiden Seitenwänden bzw. zwei gegenüberliegenden Seitenwandfortsätzen erfolgt. Für die konkrete Anbindung des Auslegers an eine diesen tragende Abstützung und somit zum Einkoppeln der Anbindungskräfte in den Ausleger ist ein separates Anschlussstück vorgesehen. Nicht erfindungsgemäß kann es derart ausgeformt sein, dass es an die Seitenwände stoffschlüssig, beispielsweise im Rahmen eines Clinchen oder Widerstandsschweißen angeformt ist und erfindungsgemäß jedenfalls unter Last die Seitenwände formschlüssig eingreift und vorzugsweise diese auch in Querrichtung zur Längserstreckung des Auslegers verbindet. Ist das Anschlussstück im oberen Bereich des Profils angeordnet, sind auf diese Weise die freien Enden der Seitenwände verbunden. Das Anschlussstück kann hierfür Riegelelemente aufweisen, die einen Hinterschnitt ausbilden, sodass in Querrichtung ein Formschluss zwischen Anschlussstück und jeweiliger Seitenwand entsteht. Auf diese Weise wird verhindert, dass die Seitenwände im Anbindungsbereich gespreizt werden. Dies ist beispielsweise vorteilhaft bei einem trapezförmigen Querschnitt des Profils. Um einen optimalen Kraftfluss zu ermöglichen, ist bevorzugt vorgesehen, dass das Anschlussstück innerhalb des Profilvolumens, mithin zwischen den beiden Seitenwänden angeordnet ist.

Das Profil ist typischerweise aus einem Stahlblech, bevorzugt einem bandverzinkten Stahlblech, hergestellt. Ein bandverzinktes Stahlblech kann genutzt werden, da zum Herstellen des Auslegers nach der Erfindung nur Stanz- und Umformprozesse, jedoch keine Schweißprozesse, bei denen die Verzinkung verdampfen würde, benötigt werden. Grundsätzlich können aufgrund der hervorragenden mechanischen Auslegung auch andere Werkstoffe, beispielsweise Kunststoffe, eingesetzt werden.

Die Erfindung wird nachstehend anhand der beiliegenden Figuren im Gesamtkontext eines Kabeltragsystems nachstehend näher erläutert. Es zeigen:
- **Fig. 1:**: Ein Kabeltragsystem mit einer einen Ausleger und ein Anschlussstück bildenden Baugruppe, das an einen Hängestiel angeschlossen ist,
- **Fig. 2:**: das Anschlussstück der Baugruppe in einer perspektivischen Alleindarstellung,
- **Fig. 3:**: der Ausleger in einer perspektivischen Alleindarstellung,
- **Fig. 4:**: eine vergrößerte Detaildarstellung der Baugruppe mit dem in den Ausleger eingesetzten Anschlussstück und
- **Fig. 5:**: die Baugruppe, an deren Ausleger ein Kabeltrassenelement befestigt ist.

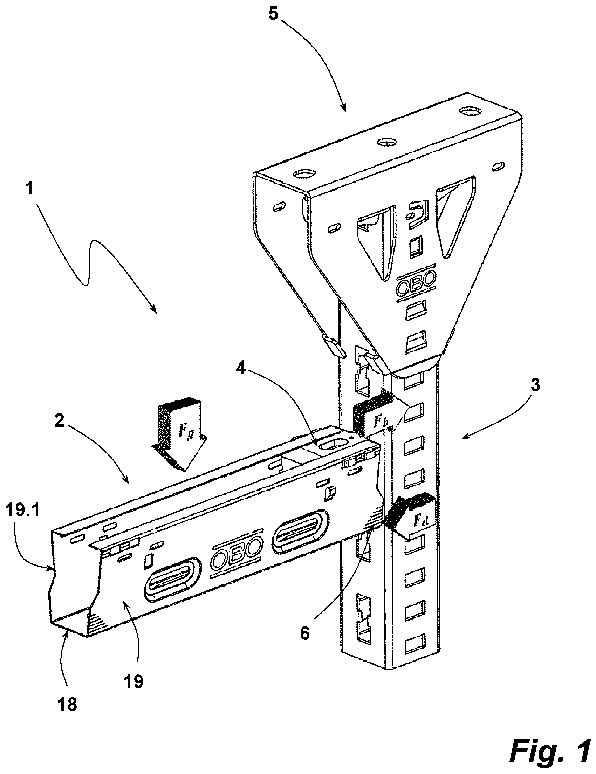

Figur 1 zeigt ein Kabeltragsystem 1. Das Kabeltragsystem 1 umfasst eine Baugruppe, gebildet durch einen endseitig einseitig abgestützten Ausleger 2 sowie ein den Ausleger 2 und eine diesen tragende Abstützung 3 verbindendes Anschlussstück 4. Die Abstützung 3 ist in der Darstellung der Figur 1 beispielhaft als herabragender Hängestiel ausgeführt, der an einem an einer nicht dargestellten Decke angeschlossenen Kopfstück 5 befestigt ist.

Das Anschlussstück 4 ist an einen Endabschnitt des Auslegers 2 in dessen oberen Bereich angebunden. Wirkt eine Gewichtskraft F_{g} auf den Ausleger 2, stützt sich der Ausleger 2 aufgrund des eingebrachten Biegemomentes mit seinem dem Anschlussstück 4 gegenüberliegenden, mit sich in Längserstreckungsrichtung des Auslegers 2 ersteckenden, linienförmigen Prägungen versehenen Bereich 6 an der Abstützung 3 ab. Bei dem dargestellten Ausführungsbeispiel ist die gesamte untere Stirnfläche des Auslegers 2 an Abstützung 3 abgestützt, sodass auf diesen Bereich eine Druckkraft F_{d} wirkt. Auf das Anschlussstück 4 wirkt entgegengesetzt hierzu die aus der vorbeschriebenen Abstützanordnung resultierende Zugkraft F_{b} in Längserstreckungsrichtung des Auslegers 2 sowie die Gewichtskraft F_{g}.

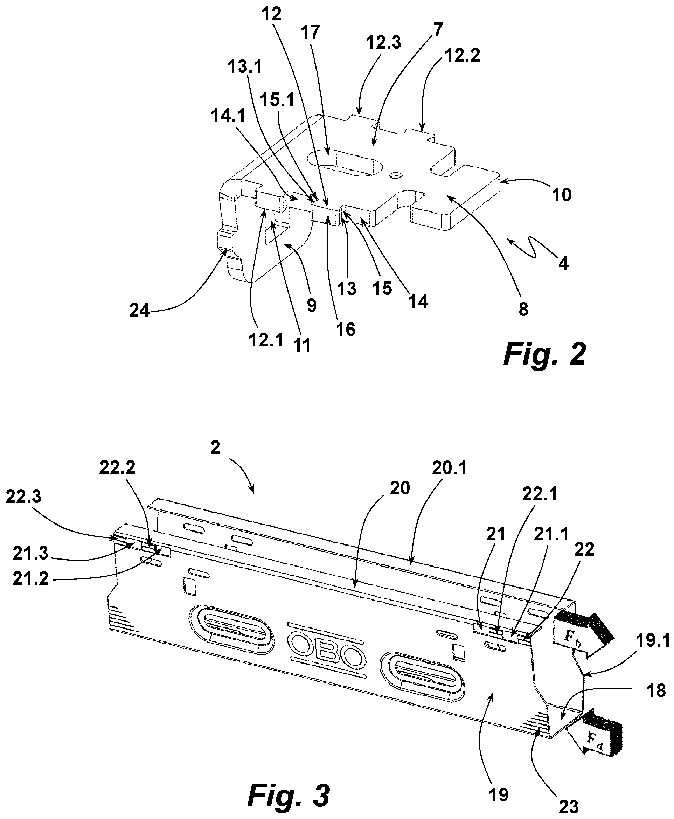

Figur 2 zeigt das Anschlussstück 4 in einer isolierten Ansicht. Das Anschlussstück 4 umfasst einen flächigen Festlegeabschnitt 7 sowie zwei daran gegenüberliegend angeschlossene, der Längserstreckung des Anschlussstücks 4 folgende Befestigungsabschnitte 8, 9. Ein erster Befestigungsabschnitt 8 ist nach Art eines Hammerkopfes 10 ausgebildet. Der zweite Befestigungsabschnitt 9 ist gegenüber dem Festlegeabschnitt 7 um einen Winkel gegenüber dem Festlegeabschnitt 7 abgewinkelt und umfasst eine Aussparung 11, durch die eine nicht näher dargestellte Schraube hindurchführbar ist, um das Anschlussstück 4 beispielsweise an einer Wand zu befestigen.

Im Bereich des Festlegeabschnittes 7 umfasst das Anschlussstück 4 vier Riegelelemente 12, 12.1, 12.2, 12.3. Diese befinden sich in der gleichen Ebene wie der Festlegeabschnitt 7 und sind an diesen nach außen in Querrichtung zur Längserstreckung des Auslegers 2 angeformt.

Die Außenkontur der Riegelelemente 12, 12.1, 12.2, 12.3 ist schwalbenschwanzförmig. Nachstehend ist die Kontur beispielhaft für ein Riegelelement 12 erläutert; diese Ausführungen gelten für die weiteren Riegelelemente 12.1, 12.2, 12.3 gleichermaßen. Die in Längserstreckungsrichtung des Festlegeabschnittes 7 weisenden Eingreifflächen 13, 13.1 sind gegenüber dem zurückversetzten Teil 14, 14.1 geneigt, sodass sich jeweils eine V-förmige Kerbe 15, 15.1 als in Querrichtung wirkender Hinterschnitt im Übergang zwischen Eingreiffläche 13, 13.1 und sich daran anschließendem zurückversetzten Teil 14, 14.1 ausbildet. Der Abstand der beiden einer Verriegelung dienenden Kerben 15, 15.1 zueinander ist kleiner als die Weite der von dem Anschlussstück 4 wegweisenden Stirnfläche 16 des Riegelelementes 12.

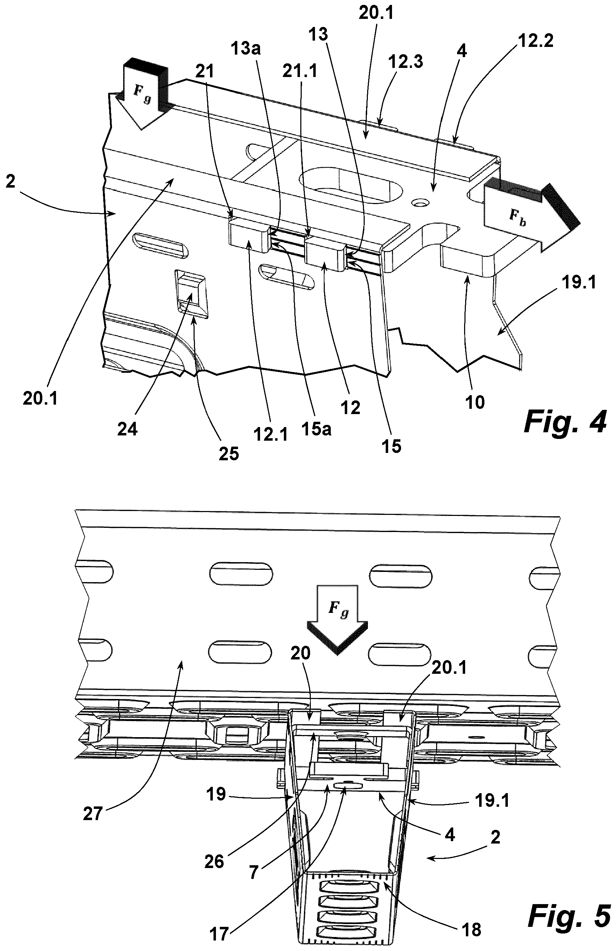

Im Festlegeabschnitt 7 ist eine weitere Aussparung 17 vorgesehen, an der ein nicht näher dargestelltes Kabeltrassenelement befestigt werden kann, wenn das Anschlussstück 4 an dem Ausleger 2 montiert ist. Hierzu kann beispielweise eine Schraub-Mutter-Verbindung dienen (siehe auch Figuren 4 und 5).

Figur 3 zeigt den Ausleger 2. Der Ausleger 2 ist als in vertikaler Richtung nach oben offenes, der Längserstreckung des Auslegers 2 folgendes Profil ausgebildet. Dieses umfasst einen Rücken 18 sowie daran seitlich angeschlossene und in dieselbe Richtung abragende Seitenwände 19, 19.1 in Form von Schenkeln. An den freien Enden der Seitenwände 19, 19.1 sind zueinander weisende Fortsätze 20, 20.1 abgekantet, die die Biegesteifigkeit der Seitenwände 19, 19.1 erhöhen.

In die Seitenwände 19, 19.1 sind symmetrisch bezüglich der vertikalen Mittellängsebene des Auslegers 2 im Bereich seiner beiden Enden jeweils gegenüberliegende Aussparungen 21, 21.1, 21.2, 21.3 vorgesehen (die hinteren Aussparungen sind durch den Fortsatz 20.1 in Figur 3 verdeckt). Diese sind unmittelbar unterhalb der abgekanteten Fortsätze 20, 20.1 in den Ausleger 2 eingebracht; sie sind in dem von dem Rücken 18 wegweisenden Endabschnitt der Seitenwände 19, 19.1 angeordnet. In diese Aussparungen 21, 21.1, 21.2, 21.3 greifen, wenn das Anschlussstück 4 an dem Ausleger 2 montiert ist, die Riegelelemente 12, 12.1, 12.2, 12.3 ein (siehe Figur 4). Dabei ist vorgesehen, dass der Ausleger 2 nur an einer Seite mit einem Anschlussstück 4 an einer Abstützung 3 angeschlossen ist; das andere Ende ist frei. Dennoch kann durch den hier vorgeschlagenen Ausleger 2 die Anschlussseite variiert werden.

Zwischen den jeweils benachbarten Aussparungen 21, 21.1, 21.2, 21.3 eines Endes sowie zu den freien Enden des Auslegers 2 weisend, sind Prägungen 22, 22.1, 22.2, 22.3, hier linienförmig ausgebildet, vorgesehen, durch die diese Bereiche kaltverfestigt sind. Hierdurch können größere Kräfte über die Riegelelemente 12, 12.1, 12.2, 12.3 in die Aussparungen 21, 21.1, 21.2, 21.3 einfassenden Abschnitte der jeweiligen Seitenwand 19, 19.1 eingeleitet werden. Zudem verteilt sich eine in die Aussparungen 21, 21.1, 21.2, 21.3 eingebrachte Zugkraft F_{b} in Richtung der Längserstreckung des Auslegers 2 besser in den Seitenwänden 19, 19.1 des Auslegers 2, was ebenfalls einem Ausreißen entgegenwirkt.

Im Bereich des dem Anschlussstück 4 gegenüberliegenden Bereich 6 ist zumindest eine Prägung 23 vorgesehen, deren Längserstreckung des Auslegers 2 folgt, hier beispielhaft durch eine Vielzahl an Linienprägung ausgeführt. Ist der Ausleger 2 an der Abstützung 3 mit seinem Rücken 18 bzw. dem unteren Bereich der Seitenwänden 19, 19.1 abgestützt, wird durch die Prägung 23 einem Ausknicken des unteren Bereichs der Seitenwände 19, 19.1 durch die eingebrachte Druckkraft F_{d} entgegengewirkt.

Weitere Prägungen oder Aussparungen können vorgesehen sein. Diese können zum Befestigen zusätzlicher, nicht näher dargestellter Elemente, etwa Kabeltrassenelemente, zur Aussteifung des Auslegers 2 oder der Materialeinsparung und damit Gewichtsreduktion dienen.

Figur 4 zeigt einen Ausschnitt der Baugruppe auf die Stirnseite des Auslegers 2 mit dem eingesetzten Anschlussstück 4. Die Riegelelemente 12, 12.1, 12.2, 12.3 greifen in die gegenüberliegenden Aussparungen 21, 21.1 des Auslegers 2 ein.

Auf den Ausleger 2 wirkt im Belastungsfall eine Gewichtskraft F_{g} (siehe auch Figur 1), aus der aufgrund der endseitig einseitigen Abstützung des Auslegers 2 ein Biegemoment resultiert. Da sich, wie in Figur 1 zu erkennen, der Ausleger 2 an dem dem Anschlussstück 4 in vertikaler Richtung gegenüberliegenden Abschnitt 6 - dem unteren Ende des Auslegers 2 - an der Abstützung 3 abstützt, wirkt im oberen Bereich des Auslegers 2 und damit im Bereich der Anbindung an das Anschlussstück 4 auf das Anschlussstück 4 eine aus dem Biegemoment resultierende Befestigungskraft F_{b} als Zugkraft. Durch die in Längserstreckung des Auslegers 2 wirkende Zugkraft F_{b} werden die die Aussparungen 21, 21.1 umgebenden Bereiche aufgrund der schrägen Eingreifflächen 13, 13a in die einer Seitenwandverriegelung in Querrichtung dienenden, als Hinterschnitte ausgebildeten Kerben 15, 15a gezogen. Durch die auf den nach oben weisenden Abschluss des Auslegers 2 wirkende Zugkraft ist wirksam verhindert, dass das C-förmige Profil des Auslegers 2 an seiner dem Rücken 18 gegenüberliegenden Seite selbst unter höheren Belastungen aufklappt.

Um die Flächenpressung im Bereich der Anbindung der Riegelelemente 12, 12.1, 12.2, 12.3 zu der Aussparung 21, 21.1 möglichst gering zu halten, weist das Anschlussstück 4 eine deutlich höhere Materialstärke auf als das Profil des Auslegers 2. Die Materialstärke des Anschlussstücks 4 ist für die Höhe des Linienkontaktes zwischen Riegelelement 12, 12.1, 12.2, 12.3 und Aussparung 21, 21.1 ausschlaggebend und typischerweise mindestens doppelt oder mindestens dreimal so groß wie die Materialstärke des Auslegers 2.

Zur Montage des Anschlussstücks 4 in dem Ausleger 2 wird dieses zunächst mit seinen Riegelelementen 12.2, 12.3 der einen Seite in die Nähe der dazugehörigen, in der Figur durch den Fortsatz 20.1 verdeckten Aussparungen gebracht (etwa anliegend an dem oberen Fortsatz 20.1 der Seitenwand 19.1). Dann stützt sich der abgewinkelte Befestigungsabschnitt 9 an den Seitenwänden 19, 19.1 ab, während das Anschlussstück 4 um eine Achse parallel zur Längserstreckung des Anschlussstücks 4 gekippt wird, wodurch die beiden elastisch ausgelegten Seitenwände 19, 19.1 gespreizt werden, bis die Riegelelemente 12, 12.1 der anderen Seite in die entsprechenden Aussparungen 21, 21.1 des Auslegers 2 einspringen. Um diesen Vorgang zu unterstützen, weist der zweite Befestigungsabschnitt 9 beidseitig Spreiznasen 24 auf, die, wenn das Anschlussstück 4 in dem Ausleger 2 montiert ist, in entsprechende Aussparungen 25 das Auslegers 2 eingreifen. Es kann vorgesehen sein, dass die Spreiznasen 24 an dem die Aussparungen 25 umgebenden Bereich formschlüssig in Längserstreckungsrichtung des Auslegers 2 anliegen, sodass auch hier unter Zugbelastung ein Formschluss entsteht.

Figur 5 zeigt den zuvor beschriebenen Ausleger 2, befestigt mit einem Anschlussstück 4 an einer nicht näher dargestellten Wand mittels dessen zweiten Befestigungsabschnitts (hier nicht erkennbar). Verdeutlicht wird hier die trapezförmige Ausbildung des Profils des Auslegers 2 bezogen auf den Rücken 18 sowie die angeformten Seitenwände 19, 19.1: Der Abstand zwischen den beiden Seitenwänden 19, 19.1 verringert sich zu dem Rücken 18 hin. Das Profil verjüngt sich somit quer zur Längserstreckung desselben in Gewichtskraftrichtung F_{g}. Auf diese Weise kann zwischen den jeweiligen Seitenwänden 19, 19.1 und ihrem jeweiligen Fortsatz 20, 20.1 ein Anschlusselement 26 eingeclipst werden, dass sich gegen die Gewichtskraft F_{g} an den trapezförmigen Seitenwänden 19, 19.1 und entgegen der Gewichtskraft F_{g} an den von den Seitenwänden 19, 19.1 abgekanteten Fortsätzen 20, 20.1 abstützt. An dem Anschlusselement 26 ist ein Kabeltrassensegment 27 mit nicht näher dargestellten Schrauben reibschlüssig befestigt. Zudem kann vorgesehen sein, durch die Aussparung 17 im Festlegeabschnitt 7 des Anschlussstücks 4 eine Schraube durch das Kabeltrassensegment 27 zu führen und mit einer nicht dargestellten Mutter gegenzukontern.

Im unteren Bereich des Auslegers 2 stützt sich dieser an in dieser Figur nicht dargestellten Abstützung mit seinem Rücken 18, bzw. dem unteren Bereich der Seitenwände 19, 19.1 ab. Durch die Abstützung wird eine Druckkraft F_{d} in Längserstreckung des Auslegers 2 in den unteren Bereich der Seitenwände 19, 19.1 eingebracht. Um ein Ausbeulen/Knicken derselben zu verhindern, sind die Seitenwände 19, 19.1 miteinander durch den Rücken 18 verbunden und so nicht nur gegenseitig, sondern auch durch den Rücken 18 selbst gegen eine Querbiegung abgestützt.

Die Erfindung ist anhand eines Ausführungsbeispiels beschrieben worden. Ohne den Schutzbereich, beschrieben durch die Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Kabeltragsystem
- 2: Ausleger
- 3: Abstützung
- 4: Anschlussstück
- 5: Kopfstück
- 6: dem Anschlussstück gegenüberliegender Bereich
- 7: Festlegeabschnitt
- 8, 9: Befestigungsabschnitt
- 10: Hammerkopf
- 11: Aussparung im Befestigungsabschnitt
- 12, 12.1, 12.2, 12.3: Riegelelement
- 13, 13.1, 13a, 13a.1: Eingreiffläche
- 14, 14.1: zurückversetzter Teil
- 15, 15.1, 15a, 15a.1: Kerbe
- 16: Stirnfläche
- 17: Aussparung im Festlegeabschnitt
- 18: Rücken
- 19, 19.1: Seitenwand
- 20, 20.1: Fortsatz
- 21, 21.1, 21.2, 21.3: Aussparung im Ausleger
- 22, 22.1, 22.2, 22.3: Prägung
- 23: Prägung
- 24: Spreiznase
- 25: Aussparung für Spreiznase
- 26: Anschlusselement
- 27: Kabeltrassensegment
- F_{g}: Gewichtskraftrichtung
- F_{b}: Befestigungskraftrichtung
- F_{d}: Druckkraft

## Patentansprüche

1. Anordnung umfassend eine Abstützung und einen endseitig einseitig an der Abstützung (3) abgestützten Ausleger (2) für ein Kabeltragsystem (1) zum Tragen einer Kabeltrasse, der Ausleger (2) gebildet aus einem im Querschnitt offenen Profil mit einem Rücken (18) und daran angeformten, ein Profilvolumen einschließenden Seitenwänden (19, 19.1), wobei die Öffnungsrichtung des belasteten Profils entgegen der Gewichtskraftrichtung (F_{g}) weist, wobei das Profil des Auslegers (2) in seinem Querschnitt trapezförmig ausgebildet ist, wodurch sich der Abstand zwischen den Seitenwänden (19, 19.1) in Richtung der freien Enden vergrößert, und dass das Profil des Auslegers (2) in einem dem Rücken (18) in vertikaler Richtung gegenüberliegenden Bereich an eine den Ausleger (2) tragende Abstützung (3) angebunden ist und im Bereich des Rückens (18) an der Abstützung (3) abgestützt ist, **dadurch gekennzeichnet, dass** eine Anbindung des Auslegers (2) über zumindest eine Seitenwand (19, 19.1) oder eines Seitenwandfortsatzes erfolgt, wobei zum Anbinden des Auslegers (2) an eine diese tragenden Abstützung (3) ein Anschlussstück (4) vorgesehen ist, welches formschlüssig in die Seitenwände (19, 19.1) in ihrem dem Rücken (18) gegenüberliegenden Endabschnitt eingreift.

2. Anordnung nach Anspruch 1, **dadurch gekennzeichnet, dass** die Seitenwände (19, 19.1) des Auslegers (2) über jeweils abgekantete, zueinander weisende Fortsätze (20, 20.1) verfügen.

3. Anordnung nach einem der Ansprüche 1 oder 2, **dadurch gekennzeichnet, dass** das Profil des Auslegers (2) seiner Längserstreckung folgend symmetrisch ausgebildet ist.

4. Anordnung nach einem der Ansprüche 1 bis 3, **dadurch gekennzeichnet, dass** zumindest ein Anschlusselement (26) zum Befestigen von Leitungen oder eines Kabeltrassensegmentes (27) an dem Ausleger (2) vorgesehen oder mit diesem in Eingriff gestellt ist, das an seinen Seitenwänden (19, 19.1) und/oder an seinen Fortsätzen (20, 20.1) abgestützt ist.

5. Anordnung nach Anspruch 1 bis 4, **dadurch gekennzeichnet, dass** das Anschlussstück (4) zum formschlüssigen Eingreifen in die Seitenwände (19, 19.1) über Riegelelemente (12, 12.1, 12.2, 12.2) verfügt, die in in die Seitenwände (19, 19.1) eingebrachte Aussparungen (21, 21.1, 21.2, 21.3) eingreifen.

## Claims

1. An arrangement comprising a support and an cantilever arm (2) for a cable support system (1), which is supported at the end on one side on the support (3), for supporting a cable route, the cantilever arm (2) being formed from a profile which is open in cross-section and has a back (18) and side walls (19, 19.1) which are integrally formed thereon and enclose a profile volume, wherein the opening direction of the loaded profile points counter to the direction of the weight force (F_{g}), the profile of the extension arm (2) being of trapezoidal design in its cross-section, as a result of which the distance between the side walls (19, 19.1) increases in the direction of the free ends, and in that the profile of the cantilever arm (2) in a region opposite the back (18) in the vertical direction is connected to a support (3) supporting the cantilever arm (2) and is supported on the support (3) in the region of the back (18), **characterized in that** the cantilever arm (2) is connected via at least one side wall (19, 19.1) or a side-wall extension, wherein a connecting piece (4) is provided for connecting the cantilever arm (2) to a support (3) supporting the latter, which connecting piece engages in a form-fitting manner in the side walls (19, 19.1) in their end portion opposite the back (18).

2. The arrangement according to claim 1, **characterized in that** the side walls (19, 19.1) of the cantilever arm (2) have in each case bent-over extensions (20, 20.1) pointing towards one another.

3. The arrangement according to any one of claims 1 or 2, **characterized in that** the profile of the cantilever arm (2) is designed symmetrically along its longitudinal extent.

4. The arrangement according to any one of claims 1 to 3, **characterized in that** at least one connecting element (26) is provided for fastening lines or a cable route segment (27) to the cantilever arm (2) or is engaged with the latter, which connecting element is supported on its side walls (19, 19.1) and/or on its extensions (20, 20.1).

5. The arrangement according to claims 1 to 4, **characterized in that** the connecting piece (4) has locking elements (12, 12.1, 12.2, 12.2) for form-fitting engagement in the side walls (19, 19.1), which locking elements engage in recesses (21, 21.1, 21.2, 21.3) made in the side walls (19, 19.1).

## Revendications

1. Agencement comprenant un support et une flèche (2) à appui d'un seul côté sur le support (3) pour un système de support de câble (1) destiné à supporter un chemin de câble, la flèche (2) étant formée d'un profilé à section transversale ouverte avec un arrière (18) et des parois latérales (19, 19.1) formées sur celui-ci enfermant un volume de profil, dans lequel la direction d'ouverture du profil chargé pointe contre la direction de la gravité (F_{g}), dans lequel le profilé de la flèche (2) est trapézoïdal en section transversale, de sorte que la distance entre les parois latérales (19, 19.1) augmente en direction des extrémités libres, et que le profil de la flèche (2) est relié à un support (3) portant la flèche (2) dans une région opposée à l'arrière (18) dans la direction verticale et prend appui sur le support (3) dans la zone de l'arrière (18), **caractérisé en ce qu'un** raccordement de la flèche (2) s'effectue par au moins une paroi latérale (19, 19.1) ou un prolongement de paroi latérale, dans lequel une pièce de raccordement (4) est prévue pour relier la flèche (2) à un support (3) portant la flèche, qui vient en prise par complémentarité de forme dans les parois latérales (19, 19.1) dans leur section d'extrémité opposée à l'arrière (18).

2. Dispositif selon la revendication 1, **caractérisé en ce que** les parois latérales (19, 19.1) de la flèche (2) comportent des prolongements (20, 20.1) respectivement pliés et tournés l'un vers l'autre.

3. Dispositif selon l'une des revendications 1 ou 2, **caractérisé en ce que** le profil de la flèche (2) est réalisé symétriquement suivant son extension longitudinale.

4. Dispositif selon l'une des revendications 1 à 3, **caractérisé en ce qu'**au moins un élément de raccordement (26) est prévu pour la fixation de conduites ou d'un segment de chemin de câbles (27) sur la flèche (2) ou est mis en prise avec celle-ci, lequel élément de raccordement est appuyé sur ses parois latérales (19, 19.1) et/ou sur ses prolongements (20, 20.1).

5. Dispositif selon les revendications 1 à 4, **caractérisé en ce que** la pièce de raccordement (4) dispose d'éléments de verrouillage (12, 12.1, 12.2, 12.2) pour venir en prise par complémentarité de forme dans les parois latérales (19, 19.1), lesquels éléments viennent en prise dans des évidements (21, 21.1, 21.2, 21.3) ménagés dans les parois latérales (19, 19.1).
